## Europäisches Patentamt
## European Patent Office
## Office européen des brevets

(11) Veröffentlichungsnummer: **0 159 307**
**B1**

(12) **EUROPÄISCHE PATENTSCHRIFT**

(45) Veröffentlichungstag der Patentschrift: 02.05.90

(21) Anmeldenummer: 85870039.6

(22) Anmeldetag: 19.03.85

(51) Int. Cl.⁵: **B 29 C 47/02**, B 29 C 47/94 // F16L9/12 , B29L23:22

(54) **Verfahren zum Aufbringen eines elektrisch leitfähigen Drahtes auf ein Kabelschutzrohr.**

(30) Priorität: 20.03.84 BE 212599

(43) Veröffentlichungstag der Anmeldung:
23.10.85 Patentblatt 85/43

(45) Bekanntmachung des Hinweises auf die Patenterteilung:
02.05.90 Patentblatt 90/18

(84) Benannte Vertragsstaaten:
AT CH DE FR GB IT LI LU NL SE

(56) Entgegenhaltungen:
EP-A-0 010 835
DE-A-2 248 441
DE-A-2 450 451
DE-B-1 238 196
FR-A-1 552 682
FR-A-2 397 934
US-A-3 555 170
US-A-4 098 636
US-A-4 168 198

(73) Patentinhaber: Kabelwerk Eupen AG Cablerie d'Eupen SA Kabelfabriek Eupen NV
Malmedyer Strasse 9
B-4700 Eupen (BE)

(72) Erfinder: Pelzer, Rudolf
Auf der Pief 37
D-5120 Herzogenrath (DE)

(74) Vertreter: Overath, Philippe
Cabinet Bede 13, Avenue Antoine Depage
B-1050 Bruxelles (BE)

## Beschreibung

Die Erfindung betrifft ein Verfahren zum Aufbringen eines elektrisch leitfähigen Drahtes auf ein Schutzrohr, wobei man den Draht bei der Schutzrohr-Herstellung fortlaufend entlang einer zur Schutzrohrachse parallelen Mantellinie verlaufend an den Außenumfang des Schutzrohres aufklebt oder in den Schutzrohrmantel einfrittet oder einschmilzt.

Ein derartiges Verfahren ist für die Herstellung von Haushalts-Installationsrohren bekannt (EP-A-10 835).

Wendet man dieses Verfahren für die Herstellung von Kabelschutzrohren an, so ergeben sich aufgrund der extremen Kabelschutzrohrlänge (Rohrlänge im Bereich von einem oder mehreren Kilometern im Falle von Lichtwellenleiter-Kabelschutzrohren) mit der Notwendigkeit, das Kabelschutzrohr aufzurollen, Spannungsprobleme im Kabelschutzrohr aufgrund des unterschiedlichen Zug- und Druckverhaltens von Kabelschutzrohr und Draht. Dieses Problem als solches ist nicht neu. Die US-A-3 555 170 gibt als bekannte Lösung dieses Problems an, den elektrisch leitfähigen Draht schraubenförmig entlang des Rohrs zu führen. Um die hierbei auftretenden hohen Herstellungskosten zu reduzieren, wird in dieser Druckschrift vorgeschlagen, einen Metallgewebe-Streifen in den Rohrmantel einzubetten mit der Möglichkeit der Verlängerung oder Verkürzung entsprechend dem Schlauchmaterial. Auch diese Lösung ist nicht voll befriedigend aufgrund der Verwendung eines Drahtgewebes mit erhöhten Herstellungskosten und komplizierter Handhabung beim Einbringen in das Rohrmaterial im Vergleich zu einem einzelnen Draht mit günstigem Bezugspreis und leichterer Verarbeitung aufgrund der Draht-Eigensteifigkeit.

Die Aufgabe der Erfindung liegt darin, ein Verfahren der eingangs genannten Art zur Herstellung von Kabelschutzrohren in einfacher und kostengünstiger Weise anzugeben, welches sicherstellt, daß das anschließend aufgewickelte Kabelschutzrohr im wesentlichen frei ist von zwischen dem Draht und dem Kabelschutzrohr wirkenden Zug- oder Druckspannungen.

Diese Aufgabe wird dadurch gelöst, daß man zur Kabelschutzrohr-Herstellung das Kabelschutzrohr mit dem Draht längs einer Kabelschutzrohr-Mantellinie verlaufend versieht, die in einer in Bezug auf die Biegung des Kabelschutzrohres beim anschließenden Aufwickeln des fertiggestellten Kabelschutzrohrs biegeneutralen Rohrumfangzone liegt.

Aufgrund dieser Maßnahmen werden Zug- oder Druckspannungen zwischen dem Draht und Kabelschutzrohr-Mantel vermieden. Es können ohne weiteres zwei Drähte eingelegt werden, da stets zwei biegeneutrale Rohrumfangszonen vorliegen (zur Rohrlängsrichtung parallele Rohr-Mantellinien, die einander in Richtung parallel zur Wickelachse diametral gegenüberliegen). Die Verdoppelung der Leiterzahl erhöht die Detektiersicherheit. Das Drahtpaar kann mittels des bereits erhärteten Kabelschutzrohres von den entsprechenden Drahtrollen abgezogen werden, so daß auf eine Draht-Vorschubeinrichtung, beispielsweise in Form eines angetriebenen Rollenpaares, verzichtet werden kann. Da die beiden Detektierdrähte parallel zur Achse des Kabelschutzrohres in dessen Wandung eingebettet sind, entstehen beim Abziehen der Drähte von den Vorratsrollen keine deformierenden Kräfte in dem noch plastischen Teil des extrudierten Kabelschutzrohres.

Um die innige Verbindung von Kabelschutzrohr-Mantel und Draht zu verbessern, wird vorgeschlagen, daß man den Draht vor dem Andrücken an das Kabelschutzrohr erhitzt. Alternativ oder zusätzlich kann hierbei vorgesehen sein, daß man den Draht an einer Stelle zuführt, an welcher das Kabelschutzrohr noch nicht erhärtet ist. Der Draht kann demzufolge ohne größere Druckanwendung in den weichen Kabelschutzrohr-Mantel eingelegt werden.

Ferner wird vorgeschlagen, daß man den Draht in den Ringspalt eines Kabelschutzrohr-Spritzwerkzeuges einführt, vorzugsweise im Bereich des Auslaßendes des Ringspaltes. Die hierdurch mögliche achsparallele Zuführung der Drähte in den Ringspalt erlaubt eine präzise Positionierung des jeweiligen Drahtes in der Kabelschutzrohrwand mit allseitiger Umschließung des jeweiligen Drahtes durch Kabelschutzrohrmaterial. Eine mechanische Beschädigung des Drahtes oder gar ein Wegreißen des Drahtes beim Verlegen des Kabelschutzrohres ist somit praktisch ausgeschlossen. Auch bildet die Umschließung des Drahtes durch das Kabelschutzrohrmaterial eine äußerst wirksame Isolierung des Drahtes gegen Umwelteinflüsse, insbesondere gegen Feuchtigkeit, so daß eine Korrosion des Drahtes auch nach jahrzehntelangem Verbleib des Kabelschutzrohres in feuchtem Erdreich im wesentlichen ausgeschlossen ist. Die bevorzugte Zuführung des Drahtes im Bereich des Auslaßendes des Ringspaltes, also in einem Bereich, in welchem das Kunststoffmaterial praktisch nicht mehr unter Überdruck steht, stellt sicher, daß das Kunststoffmaterial nicht in den Drahtzuführkanal eindringt und diesen Kanal dadurch verstopft.

In einer hierzu alternativen Ausführungsform ist vorgesehen, daß man den Draht im Beeich zwischen einem Kabelschutzrohr-Spritzwerkzeug und der nächsten Bearbeitungsstufe, insbesondere einer Kalibrier-Hülse, dem Kabelschutzrohr zuführt, vorzugsweise in den Kabelschutzrohrmantel eindrückt. In diesem Bereich ist das Kabelschutzrohr von außen frei zugänglich, so daß die Zuführeinrichtung für den Draht keiner Einbauraum-Beschränkung unterliegt und folglich kostengünstig aufgebaut sein kann. Auch kommt ein nachträglicher Anbau der Drahtzuführeinrichtung an eine bereits vorhandene Kabelschutzrohr-Spritzanlage in Frage. Ferner ist in diesem Bereich das Kabelschutzrohr noch auf relativ hohen Temperaturen und damit noch derart weich, daß der Draht mittels einfacher Druckrolle an den Außenumfang des Kabelschutzrohrs gedrückt werden kann unter Einbettung in den Rohrmantel.

Man kann jedoch auch, beispielsweise aus Platzgründen, die Drahtzuführung an einen vom Kabelrohr-Spritzwerkzeug weit entfernten Ort verlegen, wenn man den Draht dem bereits verfestigten, jedoch lokal wieder durch Erwärmen weichgemachten Kabelschutzrohr zuführt und in den Kabelschutzrohrmantel eindrückt. Dies kann beispielsweise an einer Stelle anschließend an das übliche Abkühlbecken für das Kabelschutzrohr vonstatten gehen.

Ferner kann man den Draht mittels wärmeaktivierbarem Kleber und entsprechender Hitzeanwendung auf den Kabelschutzrohrmantel aufkleben.

Die Erfindung wird im folgenden an bevorzugten Ausführungsbeispielen an Hand der Zeichnung erläutert.

Es zeigt:

Fig. 1 eine stark vereinfachte Draufsicht auf eine Vorrichtung zum Aufbringen eines elektrisch leitfähigen Drahtes auf ein Kabelschutzrohr, und zwar im Bereich des Kabelschutzrohr-Spritzkopfes;

Fig. 2 einen Schnitt nach Linie II—II in Fig. 1;

Fig. 3 eine stark vereinfachte Draufsicht auf eine weitere Ausführungsform der Vorrichtung mit Zuführung des Drahtes im Bereich zwischen Kabelschutzrohr-Spritzkopf und Kalibrierhülse;

Fig. 4 eine weitere Ausführungsform der Vorrichtung mit Drahtzuführung anschließend an das Abkühlbecken und

Fig. 5 einen teilweise abgebrochenen Schnitt nach Linie V—V in Fig. 4.

Um extrem lange Kabelschutzrohre ggf. mit nachträglich einzuziehendem Kabel, insbesondere Lichtwellenleiter-Kabel (LWL-Kabel), zu jeder Zeit nach der Verlegung des Kabelschutzrohrs im Boden detektieren und identifizieren zu können, wird das Kabelschutzrohr bereits bei der Herstellung mit einem elektrischen Leiter (Draht oder Band) versehen. Insbesondere bei elektrisch nicht leitenden Kabeln, wie zum Beispiel LWL-Kabeln, schafft der am Kabelschutzrohr angebrachte Leiter die Möglichkeit einer passiven oder aktiven elektrischen Detektierung, d.h. die Möglichkeit, der Detektierung ohne bzw. mit an den elektrischen Leiter angeschlossener Stromquelle. Die Detektierung wird mittels induktionsempfindlicher Geräte vorgenommen.

Um die Herstellungskosten für das mit dem elektrischen Leiter versehene Kabelschutzrohr niedrig zu halten, geht man so vor, daß man den elektrischen Leiter bereits bei der Kabelschutzrohr-Herstellung fortlaufend an den Außenumfang des Kabelschutzrohrs aufbringt.

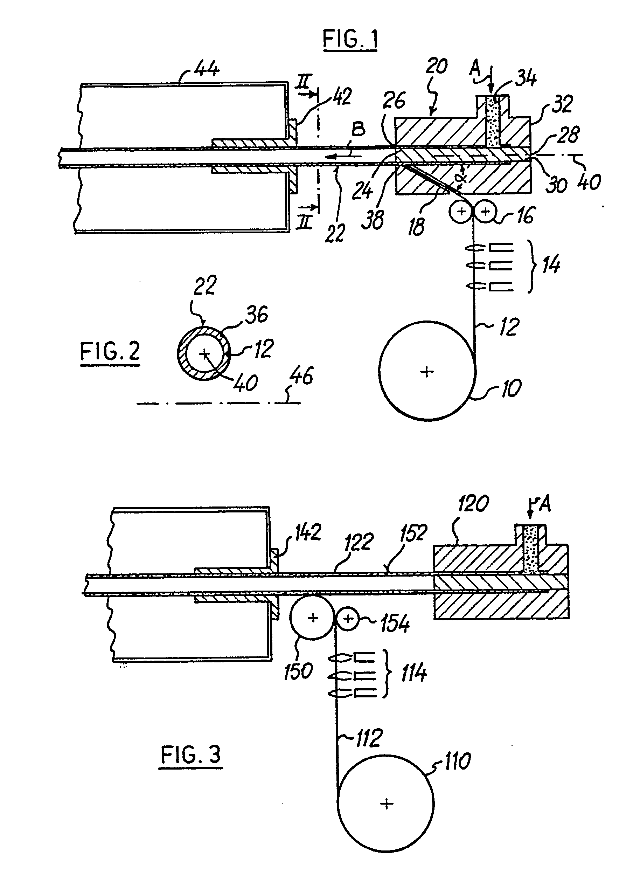

In der in Fig. 1 dargestellten ersten Ausführungsform der Erfindung wird der Leiter in Form eines von einer Spule 10 abgewickelten Drahtes 12 (0,5 bis 2 mm Durchmesser) erhitzt (symbolisiert durch 3 Gasflammen 14) sodann durch ein angetriebenes Rollenpaar 16 geführt und schließlich in eine Draht-Einführbohrung 18 eines Kabelschutzrohr-Spritzkopfes 20 eingeschoben. Diese Bohrung 18 endet in einem dem Querschnitt des herzustellenden Kabelschutzrohres 22 entsprechenden Ringspalt 24 des Spritzkopfes 20, und zwar im Bereich des (in Fig. 2 linken) Auslaßendes 26 des Ringspaltes. In der vereinfachten Darstellung der Fig. 1 wird der Ringspalt 24 dadurch gebildet, daß ein zylindrisches Formstück 28 in eine entsprechend abgestufte Durchgangsbohrung 30 eines Spritzkopfgehäuses 32 eingesetzt ist, unter Bildung des erwähnten Ringspaltes 24. In den Ringspalt 24 mündet eine Bohrung 34 zum Zuführen von thermoplastischem Extrusionsmaterial (Pfeil A) das von einem nicht dargestellten Schneckenextruder herkommt. Das unter Druck in die Bohrung 34 von außen her eingeführte Extrusionsmaterial füllt also den Ringspalt 24 und wird zum Auslaßende 26 unter Bildung des Kabelschutzrohres 22 herausgedrückt. Gleichzeitig wird dabei der Draht 18 in den Kabelschutzrohrmantel 36 vom Außenumfang her eingebettet, wie Fig. 2 zeigt. Da der zugeführte Draht 18 noch heiß ist und das Extrusionsmaterial kurz vor dem Verlassen des Ringspaltes 24 noch gut verformbar ist, ergibt sich der bündige Einschluß des Drahts 18 in den Kabelschutzrohrmantel 36. Da im Bereich der inneren Mündung 38 der Bohrung 18 andererseits das Extrusionsmaterial bereits gegenüber seiner Temperatur in der Einführbohrung 34 abgekühlt und damit etwas zäher ist und zum anderen die Bohrung 18 in zur Extrusionsrichtung B entgegengesetzer Richtung geneigt verläuft (Winkel $\alpha$ zwischen der Einführbohrung 18 und der Kabelschutzrohr-Achse 40 von etwa 30°), besteht nicht die Gefahr, daß das Extrusionsmaterial in die Mündung 38 eindringt und die Einführbohrung 18 verstopft. Zudem ist der Druck des Kabelschutzrohrmaterials in diesem Bereich bereits praktisch auf Atmosphärendruck.

Nach dem Verlassen des Spritzkopfes 20 durchläuft das Kabelschutzrohr 22 eine kurze freie Strecke, um dann in eine Kalibrierhülse 42 an einem Ende eines Kühlgehäuses 44 einzudringen. In der Kalibrierhülse 42 wird der Außendurchmesser des Kabelschutzrohrs 22 exakt auf einen vorgegebenen Wert gebracht.

Anschließend an das Kühlgehäuse 44 wird das Kabelschutzrohr aufgewickelt. In Fig. 2 ist die horizontale Wickelachse 46 angedeutet. Man erkennt, daß der in das Kabelschutzrohr 36 eingebettete Draht 12 auf gleicher Höhe wie die Kabelschutzrohr-Achse 40 liegt, also in einer biegeneutralen Rohrumfangszone beim anschließenden Aufwickeln des fertiggestellten Kabelschutzrohres 22. Zwischen Draht 12 und Kabelschutzrohrmantel 36 treten folglich beim Aufwickeln weder merkliche Zugnoch Druckspannungen auf.

In der in Fig. 3 dargestellten zweiten Ausführungsform der Erfindung sind diejenigen Bauelemente, welche ihrer Funktion nach Bauelementen in Fig. 1 entsprechen mit denselben Bezugsziffern, jedoch jeweils vermehrt um die Zahl 100, versehen.

Im Gegensatz zur Fig. 1 wird in Fig. 3 der Draht 112 nicht innerhalb des Spritzkopfes 120, sondern anschließend im Bereich zwischen dem Spritzkopf 120 und der Kalibrierhülse 142 dem Kabelschutzrohr 122 zugeführt. Vorher wird der Draht 112 von der Rolle 110 abgewickelt und erwärmt (Gasflammen 114). Der beispielsweise in radialer Richtung auf das Kabelschutzrohr 122 zulaufende Draht 112 wird von einer Draht-Andrückrolle 150 um 90° umgelenkt und an den Außenumfang 152 des Kabelschutzrohrs 122 angedrückt. Um das Nachschieben des Drahtes 112 sicherzustellen, kann eine Transportrolle 154 vorgesehen sein, welche den von der Trommel 110 kommenden Draht 112 an die Andrückrolle andrückt. Wenigstens eine der beiden Rollen 150,154 ist angetrieben.

Da das Kabelschutzrohr 122 vor dem Eintreten in die Kalibrierhülse 142 noch einigermaßen weich ist, kann der Draht 112 von der Andrückrolle 150 wenigstens teilweise in das Kabelschutzrohr 122 eingedrückt werden. Nach dem Durchgang durch die Kalibrierhülse 142 ist der Draht 112 jedoch im allgemeinen mit dem Außenumfang 152 des Kabelschutzrohrs 122 abschließend in das Kabelschutzrohr 122 eingebettet. Dies wird noch dadurch unterstützt, daß von außen her ein Vakuum an die ggf. mit radialen Durchbrechungen versehene Kalibrierhülse 142 angelegt wird. Je nach den auftretenden Temperaturen wird der Draht bündig eingefrittet oder bündig eingeschmolzen, so daß er auf seiner gesamten Länge fest im Kabelschutzrohr verankert ist. Zur Andrückrolle 150 sei noch bemerkt, daß sie sowohl Förder-, Umlenk- und Führungsfunktion für den heißen Draht übernimmt als auch gleichzeitig das in diesem Bereich noch hoch plastische Kabelschutzrohr in einer Richtung abstützt.

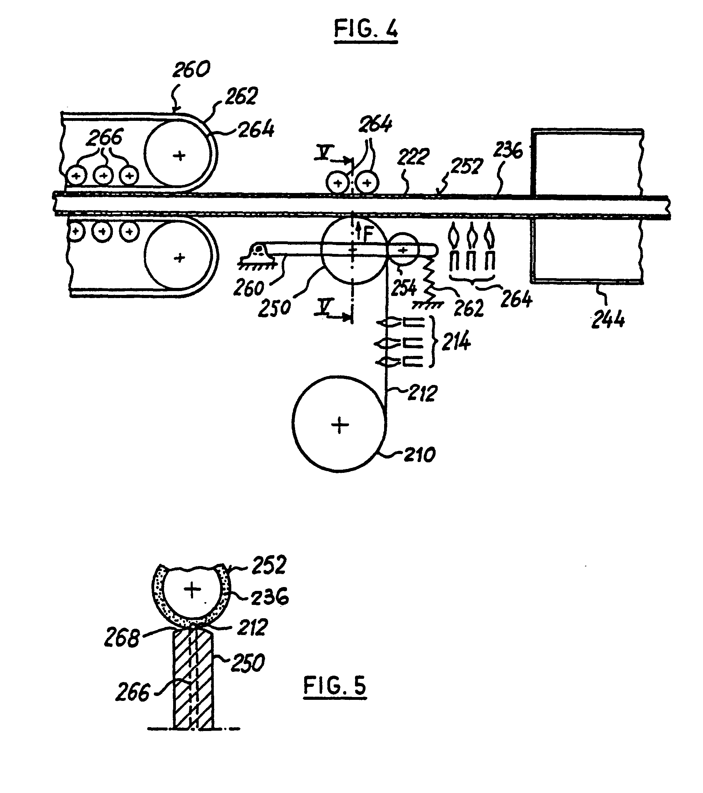

Bei der in den Fig. 4 und 5 dargestellten dritten Ausführungsform sind wiederum diejenigen Bauelemente, welche ihrer Funktion nach solchen in Fig. 3 entsprechen, mit denselben Bezugsziffern, jeweils vermehrt um die Zahl 100, versehen.

Der Draht 212 wird nunmehr im Bereich zwischen dem letzten Kühlgehäuse 244 und einer Rohrtransporteinrichtung (Rohrabzug) 260 dem Kabelschutzrohr 222 zugeführt. Die vereinfacht und abgebrochen dargestellte Rohrtransporteinrichtung 260 besteht beispielsweise aus zwei beidseits des Kabelschutzrohrs 222 anliegenden Bändern 262, welche über Umlenkrollen 264 geführt sind und mittels Andrückrollen 266 im Bereich zwischen den Umlenkrollen 264 an das Kabelschutzrohr 222 angedrückt werden.

Da das Kabelschutzrohr nunmehr fast Umgebungstemperatur erreicht hat und maximal 50° C heiß sein dürfte, wird der Draht 212 so erhitzt (Gasflammen 214) und mit so hoher Kraft auf den Außenumfang 252 des Kabelschutzrohres 222 gedrückt, daß er durch lokales Schmelzen des thermoplastischen Kunststoffmaterials sich in dieses einbettet und nach Abkühlen in die Rohrwandung 236 einfrittet.

Der von der Spule 210 kommende Draht 212 wird zwischen der Andrückrolle 250 und der Transportrolle 254 hindurchgeführt, verläuft dann über einen Winkel von etwa 90° am Außenumfang der Andrückrolle 252, um schließlich vom Kabelschutzrohr 222 mitgenommen zu werden. Die Andrückrolle 250 wird mit einer Kraft F an das Kabelschutzrohr 222 gedrückt. In der Schemadarstellung der Fig. 4 erreicht man dies dadurch, daß die Rollen 250 und 254 an einem gemeinsamen Schwenkarm 260 lagern, welcher an einem seiner Enden ortsfest schwenkbar gelagert ist. Eine an sein anderes Ende angreifende Feder 262 drückt den Schwenkarm 260 in Richtung zum Kabelschutzrohr 222. Die Vorspannung der Andrückrolle 250 gegen das Kabelschutzrohr 222 kann auch in anderer Weise vorgenommen werden.

Um ein Verbiegen des Kabelschutzrohrs 222 unter der Belastung durch die Andrückrolle 250 zu vermeiden, sind der Andrückrolle 250 gegenüberliegend zwei Stützrollen 264 vorgesehen, welche am Kabelschutzrohr 222 anliegen. Die Stützrollen 264 nehmen also die Kraft F auf.

Vor allem bei höherer Extrusionsgeschwindigkeit reicht die Druckkontaktzeit Draht-Kabelschutzrohrwand sowie die Wärmekapazität des Drahtes nicht aus, um eine Einbettung des Drahtes in das Kabelschutzrohr in ausreichendem Maße zu erzielen. Zur Erleichterung des Einschmelzens wird gemäß Fig. 4 das Kabelschutzrohr 222 in der unmittelbaren Umgebung derjenigen achsparallelen Mantellinie des Kabelschutzrohrs 222 erhitzt, längs welcher der Draht anschließend eingebettet wird. Dieses Vorheizen wird durch die in Fig. 4 erkennbaren drei Gasflammen 264 erreicht.

Gemäß Fig. 5 kann die Andrückrolle 250 (wie auch die Andrückrolle 150 in Fig. 3) mit einer im Querschnitt etwa halbkreisförmigen Umfangsnut 266 versehen sein, welche dem Drahtquerschnitt angepaßt ist. Diese Nut 266 verhindert ein seitliches Abgleiten des Drahtes 212 vom Rollenaußenumfang 268, vor allem während des Andrückens an das Kabelschutzrohr 222. Der Draht 212 wird zwar dann nicht vollständig bündig mit dem Außenumfang 236 abschließend in das Kabelschutzrohr 222 eingebettet; der Halt des Drahtes innerhalb des Kabelschutzrohres ist jedoch ausreichend groß.

Mit Hilfe der Vorrichtung gemäß Fig. 3 läßt sich auch ein von einer Spule abgezogenes Metallband auf das Rohr kaschieren oder an das Rohr kleben. Verwendet man beispielsweise einen wärmeaktivierbaren Kleber, mit welchem das Metallband beschichtet ist, so wird dies mit der Andrückrolle auf das Kabelschutzrohr aufgesiegelt, welches zu diesem Zwecke beheizbar ausgebildet ist. Man kann natürlich auch die Andrückrolle 250 gemäß Fig. 4 mit Vorteil beheizbar ausbilden, damit der Draht 212 auf der erforderlichen hohen Temperatur gehalten wird.

Das mit wärmeaktivierbarem Kleber versehene Band kann man mit den Gasflammen 214 vorheizen oder auch mit einer nicht dargestellten Infrarot-Strahlungsheizung.

**Patentansprüche**

1. Verfahren zum Aufbringen eines elektrisch leitfähigen Drahtes (12) auf ein Schutzrohr (22), wobei man den Draht bei der Schutzrohr-Herstellung fortlaufend entlang einer zur Schutzrohrachse parallelen Mantellinie verlaufend an den Außenumfang des Schutzrohres aufklebt oder in den Schutzrohrmantel (36) einfrittet oder einschmilzt, dadurch gekennzeichnet, daß man zur Kabelschutzrohrherstellung das Kabelschutzrohr (22) mit dem Draht (12) längs einer Kabelschutzrohr-Mantellinie verlaufend versieht, die in einer in Bezug auf die Biegung des Kabelschutzrohres beim anschließenden Aufwickeln des fertiggestellten Kabelschutzrohres biegeneutralen Rohrumfangzone liegt.

2. Verfahren nach Anspruch 1, dadurch gekennzeichnet, daß man den Draht vor dem Andrücken an das Kabelschutzrohr erhitzt.

3. Verfahren nach Anspruch 1 oder 2, dadurch gekennzeichnet, daß man den Draht an einer Stelle zuführt, an welcher das Kabelschutzrohr noch nicht erhärtet ist.

4. Verfahren nach Anspruch 3, dadurch gekennzeichnet, daß man den Draht in den Ringspalt eines Kabelschutzrohr-Spritzwerkzeuges einführt, vorzugsweise im Bereich des Auslaßendes des Ringspaltes.

5. Verfahren nach einem der Ansprüche 1 bis 3, dadurch gekennzeichnet, daß man den Draht im Bereich zwischen einem Kabelschutzrohr-Spritzwerkzeug und der nächsten Bearbeitungsstufe, insbesondere einer Kalibrier-Hülse, dem Kabelschutzrohr zuführt, vorzugsweise in den Kabelschutzrohrmantel eindrückt.

6. Verfahren nach einem der Ansprüche 1 und 2, daduch gekennzeichnet, daß man den Draht dem bereits verfestigten, jedoch lokal wieder durch Erwärmen weichgemachten Kabelschutzrohr zuführt und in den Kabelschutzrohrmantel eindrückt.

7. Verfahren nach einem der Ansprüche 1 und 2, dadurch gekennzeichnet, daß man den Draht mittels wärmeaktivierbarem Kleber und entsprechender Hitzeanwendung auf den Kabelschutzrohrmantel aufklebt.

**Revendications**

1. Procédé pour l'application d'un fil conducteur d'électricité (12) à une gaine de protection (22) dans lequel on applique le fil par collage, pendant la fabrication de la gaine de protection, en continu le long d'une génératrice parallèle à l'axe de la gaine de protection et située sur la périphérie extérieure de la gaine de protection, ou bien qu'on fixe ce fil à la gaine de protection (36) par frittage ou fusion, caractérisé en ce que, pour la fabrication de la gaine de protection de câble, la gaine de protection de câble (22) est pourvue du fil (12) le long d'une génératrice de la gaine de protection de câble, cette génératrice se trouvant dans la zone périphérique du tube qui est une zone neutre de flexion pour ce qui concerne la flexion de la gaine de protection de câble lorsqu'on bobine ensuite la gaine de protection de câble terminée.

2. Procédé selon la revendication 1, caractérisé en ce que l'on chauffe le fil avant que celui-ci ne soit pressé sur la gaine de protection de câble.

3. Procédé selon la revendication 1 ou 2, caractérisé en ce que l'on amène le fil à un endroit où la gaine de protection de câble n'est pas encore durcie.

4. Procédé selon la revendication 3, caractérisé en ce que l'on introduit le fil dans l'espace annulaire d'un outil d'injection de gaine de protection de câble et, de préférence, dans la zone de l'extrémité de sortie de l'espace annulaire.

5. Procédé selon l'une des revendications 1 à 3, caractérisé en ce que l'on introduit le fil dans la gaine de protection de câble dans la zone entre l'outil d'injection de la gaine de protection de câble et l'étape de traitement suivante qui est en particulier, une gaine de calibrage et qu'on l'enfonce de préférence dans la gaine de protection pour câble.

6. Procédé selon l'une des revendications 1 et 2, caractérisé en ce que l'on introduit le fil dans la gaine de protection de câble déjà durcie mais ramollie toutefois à nouveau par chauffage, et qu'on l'enfonce dans la gaine de protection pour câble.

7. Procédé selon l'une des revendications 1 et 2, caractérisé en ce que l'on applique le fil sur la gaine de protection pour câble au moyen d'une colle pouvant être activée par la chaleur et en utilisant la chaleur d'une manière appropriée.

**Claims**

1. Method for the application of an electrically conductive wire (12) to a protection sleeve (22), whereby the wire is adhesively bonded during the manufacture of the protection sleeve continuously along a generating line parallel to the axis of the protection sleeve and is located on the outside perimeter of the protection sleeve, or the wire is fastened to the protection sleeve (36), by sintering or welding, characterised by the fact that for the manufacture of the cable protection sleeve, the cable protection sleeve (22) is provided with the wire (12) along a generating line of the cable protection sleeve, whereby this generating line is in the peripheral area of the tube which is a neutral bending area for the bending of the cable protection sleeve when next the finished cable protection sleeve is coiled.

2. Method according to claim 1, characterised in that the wire is heated before it is pressed onto the cable protection sleeve.

3. Method according to claim 1 or 2 characterised in that the wire is brought to a place where the cable protection sleeve has not hardened.

4. Method according to claim 3, characterised in that the wire is introduced into the annular gap of an injection tool for the cable protection sleeve and preferably, into the exit end of the annular gap.

5. Method according to one of the claims 1 to 3, characterised in that the wire is introduced into the cable protection sleeve between the injection tool for the cable protection sleeve and the next processing stage which involves notably a calibration bushing and in which the wire is preferably pressed into the cable protection sleeve.

6. Method according to one of the claims 1 and 2, characterised by the wire being introduced into the already hardened cable protection sleeve which is locally softened again by heating and in which the wire is pressed into the cable protection sleeve.

7. Method according to one of the claims 1 and 2, characterised by the wire being glued to the cable protection sleeve by means of a heat cured adhesive and by using an appropriate heating.

## FIG. 1

## FIG. 2

## FIG. 3

FIG. 4

FIG. 5